# EUROPÄISCHE PATENTANMELDUNG

(11) **EP 4 075 212 A1**
(43) Veröffentlichungstag der Anmeldung: **19.10.2022**
(21) Anmeldenummer: 22164065.9
(22) Anmeldetag: 24.03.2022
(51) Int. Cl.: G05B 15/02

(54) **STEUERN EINES HAUSHALTSGERÄTS BEZÜGLICH EINER HAUSTECHNIK**

(30) Priorität: 16.04.2021 DE 102021203793
(71) Anmelder: BSH Hausgeräte GmbH, 81739 München (DE)
(72) Erfinder: Rauch, Tobias, 86932 Pürgen (DE); Söllner, Christoph, 81475 München (DE)

(57) **Zusammenfassung**

Ein System umfasst ein Smart Home System zur Steuerung einer Haustechnik eines Haushalts und ein Haushaltsgerät in demselben Haushalt; wobei das Haushaltsgerät eine Steuervorrichtung umfasst, die dazu eingerichtet ist, einen Steuerparameter vom Smart Home System abzurufen und in Abhängigkeit des Steuerparameters automatisch einen verbesserten Betrieb des Haushaltsgeräts zu veranlassen, einen Vorschlag zum verbesserten Betrieb des Haushaltsgeräts bereitzustellen und/oder einen Befehl an das Smart Home System zu übermitteln, dessen Ausführung einen verbesserten Betrieb des Haushaltsgeräts ermöglicht.

## Beschreibung

Die Erfindung betrifft das Steuern eines Haushaltsgeräts bezüglich einer Haustechnik. Insbesondere betrifft die Erfindung eine Kooperation zwischen einem Haushaltsgerät und einer Haustechnik.

Ein Haushalt umfasst ein Haushaltsgerät und ein Smart Home System, das dazu eingerichtet ist, eine Haustechnik des Haushalts zu steuern. Das Haushaltsgerät kann insbesondere ein Küchengerät, einen Staubsauger, ein Kleingerät oder ein Großgerät wie eine Waschmaschine, einen Geschirrspüler oder einen Wäschetrockner umfassen. Das Smart Home System umfasst üblicherweise eine zentrale Vorrichtung, die mit einer Anzahl Sensoren und/oder Aktoren der Haustechnik verbunden ist. Beispielsweise kann das Smart Home System Lichtquellen, Jalousien, eine Heizung oder eine Lüftungslange steuern.

Ein Haushaltsgerät kann über eine Kommunikationseinrichtung verfügen, um mit einem Mobilgerät wie einem Smartphone zu kommunizieren, sodass ein Benutzer erweiterte Möglichkeiten der Steuerung über das Smartphone erlangt. Das Haushaltsgerät kann auch dazu eingerichtet sein, mit einem entfernten System zu kommunizieren, insbesondere einem Server oder einem Dienst in einer Cloud. Dadurch kann das Haushaltsgerät zusätzliche Informationen beziehen, die es für die Erfüllung seiner Funktion verwenden kann. Die entfernte Stelle kann dazu eingerichtet sein, Informationen von mehreren Haushaltsgeräten im selben Haushalt zu sammeln und gegebenenfalls miteinander zu verarbeiten. Die Haushaltsgeräte können dann verbessert konzertiert oder kooperativ gesteuert werden.

Allgemein haben jedoch ein Smart Home System und ein im selben Haushalt betriebenes Haushaltsgerät keine Berührungspunkte. Die Integration eines Haushaltsgeräts in ein Smart Home System erfolgt, falls überhaupt möglich, meist nach dem Alles- oder Nichts-Prinzip, sodass das Haushaltsgerät entweder unabhängig vom Smart Home System oder vollständig in dieses eingebunden ist. Die vollständige Integration ist nicht immer wünschenswert und zwischen Geräten unterschiedlicher Hersteller auch nicht immer möglich.

Eine der vorliegenden Erfindung zu Grunde liegende Aufgabe besteht daher in der Angabe einer verbesserten Technik zur Kooperation eines Haushaltsgeräts mit einem Smart Home System. Die Erfindung löst diese Aufgabe mittels der Gegenstände der unabhängigen Ansprüche. Unteransprüche geben bevorzugte Ausführungsformen wieder.

Nach einem ersten Aspekt der vorliegenden Erfindung umfasst ein System ein Smart Home System zur Steuerung einer Haustechnik eines Haushalts und ein Haushaltsgerät in demselben Haushalt; dabei umfasst das Haushaltsgerät eine Steuervorrichtung, die dazu eingerichtet ist, einen Steuerparameter vom Smart Home System abzurufen und einen Vorschlag zum verbesserten Betrieb des Haushaltsgeräts in Abhängigkeit des Steuerparameters bereitzustellen, automatisch einen verbesserten Betrieb des Haushaltsgeräts in Abhängigkeit des Steuerparameters zu veranlassen und/oder in Abhängigkeit des Steuerparameters einen Befehl an das Smart Home System zu übermitteln, dessen Ausführung einen verbesserten Betrieb des Haushaltsgeräts ermöglicht.

Erfindungsgemäß kann das Haushaltsgerät verbessert mit dem Smart Home System kooperieren, ohne vollständig in das Smart Home System eingebunden zu werden. So können Synergien zwischen dem Haushaltsgerät und dem Smart Home System genutzt werden, ohne eine einseitige oder gegenseitige Abhängigkeit zu schaffen. Die Bereitstellung des Steuerparameters kann auf eine einfache Weise erfolgen, sodass schutzbedürftige Daten, beispielsweise Benutzungsdaten von Elementen der Haustechnik oder Benutzerinformationen, geschützt bleiben können. Die Kooperation kann zwischen Geräten unterschiedlicher Hersteller ermöglicht sein, ohne die Entwicklung oder Unterstützung eines gemeinsamen Protokolls auf beiden Seiten zu erfordern.

In einer Ausführungsform wirkt das Haushaltsgerät unmittelbar auf einen Gegenstand ein, wobei der Vorschlag eine Behandlung des Gegenstands umfasst und/oder der verbesserte Betrieb eine Behandlung des Gegenstands betrifft. Beispielsweise kann das Haushaltsgerät einen Herd umfassen, der einen Topf oder eine Pfanne erwärmt. In Abhängigkeit eines durch das Smart Home System bereitgestellten Umgebungsparameters, beispielsweise einer Luftfeuchtigkeit oder einer Lufttemperatur im Bereich des Herds, kann bestimmt werden, dass der Topf verbessert mit einem Deckel teilweise oder vollständig verschlossen werden sollte. Liegen seitens des Herdes Informationen vor, welcher Verarbeitungsschritt in dem Topf gerade ausgeführt wird, beispielsweise ein Reduzieren, ein Schmoren oder ein Simmern, so kann der Vorschlag in Abhängigkeit der gewünschten Operation bestimmt werden. Alternativ oder zusätzlich kann automatisch die Dunstabzugshaube aktiviert werden, um den Wrasen abzusaugen. Damit die dabei angesaugte Luft nicht aus ungewollten Kanälen angesaugt wird, wie z.B. einem Kaminschornstein oder einem Toilettenabluftkanal, kann ein Befehl an das Smart Home System übermittelt werden, ein geeignetes Fenster zu öffnen.

Es ist allgemein bevorzugt, dass der Vorschlag im Bereich des Haushaltsgeräts an einen Benutzer ausgegeben wird. Der Vorschlag kann auch an den Benutzer oder ein persönliches Gerät des Benutzers übermittelt werden. Eine Ausgabe des Vorschlags kann insbesondere schriftlich, graphisch, symbolisch, akustisch oder haptisch erfolgen.

Ein Betrieb des Haushaltsgeräts kann unmittelbar von einem Gegenstand im Haushalt abhängig sein, der mittels des Smart Home Systems abgetastet oder gesteuert wird. Beispielsweise kann die Auflage bestehen, eine Dunstabzugshaube nur dann zu betreiben, wenn eine Frischluftzufuhr gesichert ist, beispielsweise durch ein teilweise oder vollständig geöffnetes Fenster. Der Steuerparameter kann beispielsweise darauf hinweisen, dass anstelle des Fensters eine Tür geöffnet ist, sodass die Dunstabzugshaube auch bei geschlossenem Fenster gefahrlos betrieben werden kann.

In einer weiteren Ausführungsform ist das Smart Home System dazu eingerichtet, ein Klima in dem Haushalt zu steuern oder zumindest zu beeinflussen. Das Klima kann insbesondere in einem Zimmer gesteuert werden, in welchem sich das Haushaltsgerät befindet. Ein Einfluss der Funktion des Haushaltsgeräts auf das Klima kann berücksichtigt werden, um die Funktionen des Haushaltsgeräts und des Smart Home Systems verbessert aufeinander abzustimmen.

Beispielsweise kann das Klima eine Temperatur, eine Luftfeuchtigkeit, eine Luftqualität, einen Lärm, Lichtverhältnisse oder einen Luftaustausch betreffen. Das Haushaltsgerät kann derart betrieben werden, dass es verbessert an die geltenden klimatischen Bedingungen angepasst ist. Außerdem kann es derart gesteuert werden, dass es das Klima in einer vorbestimmten Weise beeinflusst.

In einer Ausführungsform umfasst der Steuerparameter ein Steuerungsziel des Smart Home Systems. Beispielsweise kann das Smart Home System bestimmen, dass aufgrund eines Lüftungsvorgangs die Temperatur im Haushalt abgesunken ist. Ein Steuerungsziel kann daher das Anheben der Temperatur betreffen. Das Haushaltsgerät kann, wenn es auf eine höhere Umgebungstemperatur angewiesen ist, seinen Betrieb entsprechend verzögern oder, wenn sein Betrieb das Steuerungsziel beeinflusst, verbessert in dessen Abhängigkeit gesteuert werden.

Insbesondere kann der Vorschlag zum Betrieb des Haushaltsgeräts derart bestimmt werden, dass das Steuerungsziel durch Beachtung des Vorschlags verbessert erreicht werden kann. Das Steuerungsziel kann insbesondere einen oder mehrere Parameter des Klimas im Haushalt umfassen. Dementsprechend kann der verbesserte Betrieb des Haushaltsgeräts und/oder der Befehl an das Smart Home System derart bestimmt werden, dass das Steuerungsziel verbessert erreicht wird.

Der Vorschlag bzw. der verbesserte Betrieb kann eine Änderung eines Betriebsparameters des Haushaltsgeräts umfassen, wobei die Steuervorrichtung dazu eingerichtet ist, die Änderung am Haushaltsgerät zu steuern. So kann der Vorschlag unmittelbar am Haushaltsgerät umgesetzt werden. Eine Ausgabe oder Bereitstellung des Vorschlags an einen Benutzer kann dann übersprungen werden. Optional kann eine Begründung für die Änderung des Betriebsparameters bereitgestellt werden.

Eine Kommunikation zwischen dem Haushaltsgerät und dem Smart Home System ist auf unterschiedlichen Ebenen möglich. In einer ersten Variante umfasst das Smart Home System einen Sensor, wobei das Haushaltsgerät unmittelbar mit dem Sensor kommuniziert. Dazu können vorteilhaft sowohl der Sensor als auch das Haushaltsgerät jeweils über eine drahtlose Schnittstelle verfügen, über die die Kommunikation erfolgen kann. Um zu verhindern, dass abgetastete Sensorwerte mit beliebigen Geräten ausgetauscht werden, kann sich das Haushaltsgerät gegenüber dem Sensor authentifizieren. Die Authentifikation kann das Haushaltsgerät von einer Steuerkomponente erlangen, an die der Sensor üblicherweise seine Informationen bereitstellt. Eine solche Steuerkomponente kann auch als Gateway bezeichnet werden. In einer anderen Ausführungsform ist die Steuerkomponente mit einem Gateway verbunden, das eine Kommunikation mit einem anderen Netzwerk, insbesondere einem WAN, ermöglicht.

In einer zweiten Variante kann das Smart Home System ein Gateway und mehrere Sensoren und/oder Aktoren umfassen, die mit dem Gateway kommunizieren. Dabei kann das Haushaltsgerät mit dem Gateway kommunizieren, das mit einem Kommunikationsnetz verbunden sein kann. Vorteilhaft kann dabei eine Verarbeitungsfähigkeit des Gateways ausgenutzt werden, um beispielsweise eine Authentifizierung des Haushaltsgeräts sicherzustellen, abgetastete Sensorwerte zu verarbeiten oder Sensorwerte verschiedener Sensoren miteinander in Beziehung zu setzen, bevor ein entsprechender Steuerparameter bestimmt und dem Haushaltsgerät bereitgestellt wird.

In einer dritten Variante ist das Smart Home System dazu eingerichtet, mit einer entfernten Stelle zu kommunizieren und das Haushaltsgerät ist dazu eingerichtet, mit derselben entfernten Stelle zu kommunizieren. Dabei kann die entfernte Stelle darüber entscheiden, welche Informationen des Smart Home Systems an das Haushaltsgerät bereitgestellt werden sollen. Die Entscheidung kann auch seitens des Smart Home Systems gefällt werden.

Es ist zu beachten, dass die drei Varianten nicht ausschließlich sind und unterschiedliche Varianten auch miteinander kombiniert werden können. Außerdem ist allgemein bevorzugt, dass das Haushaltsgerät spezifisch beim Smart Home System um einen oder mehrere vorbestimmte Steuerparameter nachsucht, um eine korrespondierende Antwort dann abzurufen. So kann sichergestellt werden, dass das Haushaltsgerät nur solche Informationen erhält, die es für seinen Betrieb sinnvoll umsetzen kann. Das Smart Home System kann auf der Basis der ihm zur Verfügung stehenden Informationen den nachgesuchten Steuerparameter entsprechend bereitstellen.

In einer besonders bevorzugten Ausführungsform ist das Smart Home System dafür eingerichtet, den Zustand einer Toilettenabluftvorrichtung, den Zustand eines Fensters, den Zustand einer Feuerstelle und/oder den Zustand einer Feuerstellenabluftvorrichtung zu überwachen und/oder zu steuern. Ein Hintergrund dieser Ausführungsform ist die Erkenntnis, dass es zahlreichen Nutzern von Dunstabzugshauben, die die angesaugte Luft über ein Rohr bzw. einen Schlauch durch eine Außenwand nach draußen pumpen, gelegentlich passiert, dass sie die Dunstabzugshaube aktivieren, ohne sich Gedanken darüber zu machen, woher die angesaugte Luft kommen soll. Wenn kein Fenster geöffnet ist, entsteht im Wohnraum möglicherweise ein Unterdruck, der dazu führt, dass aus sämtlichen zur Verfügung stehen Kanälen Luft angesaugt wird. Wenn dann gerade ein Feuer im Kamin brennt, wird der Rauch aus dem Schornstein in den Wohnraum gesogen, wodurch sich giftige Gase im Innenraum ansammeln können. In vielen innenliegenden Bädern existiert darüber hinaus ein Abluftkanal, der schlechte Gerüche nach dem Toilettengang beseitigen soll. Auch dieser eignet sich in umgekehrter Richtung für ein Ansaugen von Luft, wodurch beim Betrieb der Dunstabzugshaube ungewollt ein Fäkalgeruch in den Wohnraum gesogen werden kann.

Dementsprechend kann die Steuervorrichtung dafür eingerichtet sein, beim Smart Home System abzufragen, ob ein Geruchssensor in einer Toilettenabluftvorrichtung gerade Fäkalgerüche meldet und/oder ob ein Temperatursensor bzw. ein Rauchsensor in einer Feuerstellenabluftvorrichtung auf einen Betrieb der Feuerstelle hindeutet. Sollte dies der Fall sein, kann eine Dunstabzugshaube vorzugsweise erst dann in Betrieb genommen werden, wenn sichergestellt ist, dass ein Fenster in der Nähe der Dunstabzugshaube zumindest einen Spalt geöffnet ist. Alternativ oder zusätzlich kann ein Befehl an das Smart Home System übermittelt werden, um ein geeignetes Fenster zu öffnen oder um die Toilettenabluftvorrichtung zu schließen.

In einigen Ausführungsformen handelt es sich bei dem Haushaltsgerät z.B. um eine Dunstabzugshaube und das System ist vorzugsweise dafür eingerichtet, die Haustechnik und/oder die Dunstabzugshaube derartig zu steuern, dass durch die Dunstabzugshaube kein Rauch und/oder kein Fäkalgeruch in einen Wohnraum gesogen wird.

Nach einem zweiten Aspekt der vorliegenden Erfindung umfasst ein Haushaltsgerät eine Steuervorrichtung, die dazu eingerichtet ist, einen Steuerparameter von einem im selben Haushalt befindlichen Smart Home System, das zur Steuerung einer Haustechnik des Haushalts eingerichtet ist, abzurufen und in Abhängigkeit des Steuerparameters automatisch einen verbesserten Betrieb des Haushaltsgeräts zu veranlassen, einen Vorschlag zum verbesserten Betrieb des Haushaltsgeräts bereitzustellen und/oder einen Befehl an das Smart Home System zu übermitteln, dessen Ausführung einen verbesserten Betrieb des Haushaltsgeräts ermöglicht. Das Haushaltsgerät kann insbesondere Teil eines hierin beschriebenen Systems darstellen.

Beim Haushaltsgerät kann es sich beispielsweise um eine Dunstabzugshaube handeln. Der Steuerparameter kann sich z.B. auf den Zustand einer Toilettenabluftvorrichtung, den Zustand eines Fensters, den Zustand einer Feuerstelle und/oder den Zustand einer Feuerstellenabluftvorrichtung beziehen. Vorzugsweise ist dann die Steuervorrichtung dafür eingerichtet, die Haustechnik und/oder die Dunstabzugshaube derartig zu steuern, dass durch die Dunstabzugshaube kein Rauch und/oder kein Fäkalgeruch in einen Wohnraum gesogen wird.

Nach noch einem weiteren Aspekt der vorliegenden Erfindung umfasst ein Verfahren zum Steuern eines Haushaltsgeräts Schritte des Abrufens eines Steuerparameters von einem Smart Home System, das im selben Haushalt angeordnet und zum Steuern einer Haustechnik des Haushalts eingerichtet ist; und des automatischen Veranlassens eines verbesserten Betriebs des Haushaltsgeräts in Abhängigkeit des Steuerparameters, des Bereitstellens eines Vorschlags, in Abhängigkeit des Steuerparameters, zum verbesserten Betrieb des Haushaltsgeräts und/oder des Übermittelns eines Befehls an das Smart Home System in Abhängigkeit des Steuerparameters, wobei eine Ausführung des Befehls einen verbesserten Betrieb des Haushaltsgeräts ermöglicht.

Wie bereits erwähnt, kann es sich bei dem Haushaltsgerät um eine Dunstabzugshaube handeln. Der Steuerparameter kann sich wiederum auf den Zustand einer Toilettenabluftvorrichtung, den Zustand eines Fensters, den Zustand einer Feuerstelle und/oder den Zustand einer Feuerstellenabluftvorrichtung beziehen. Die oben genannten Schritte des automatischen Veranlassens eines verbesserten Betriebs des Haushaltsgeräts, des Bereitstellens eines Vorschlags und/oder des Übermittelns eines Befehls an das Smart Home System in Abhängigkeit des Steuerparameters können beispielsweise ausgeführt werden, um die Haustechnik und/oder die Dunstabzugshaube derartig zu steuern, dass durch die Dunstabzugshaube kein Rauch und/oder kein Fäkalgeruch in einen Wohnraum gesogen wird.

Das Verfahren kann insbesondere in Form eines Computerprogrammprodukts mit Programmcodemitteln vorliegen. Eine hierin beschriebene Steuervorrichtung eines Haushaltsgeräts kann dazu eingerichtet sein, das Verfahren teilweise oder vollständig auszuführen. Das Verfahren kann auch auf verschiedenen Steuervorrichtungen ausgeführt werden, von denen eine von einem Haushaltsgerät und eine andere von einem Element eines Smart Home Systems umfasst sein kann. Das Computerprogrammprodukt kann auch auf einem computerlesbaren Datenträger gespeichert sein. Vorteile oder Merkmale des Verfahrens können auf das Haushaltsgerät bzw. das System übertragen werden oder umgekehrt.

Ausführungsformen der Erfindung werden nun unter Bezug auf die beiliegenden Figuren genauer beschrieben, in denen:
- Figur 1: ein System mit einem Haushaltsgerät und einem Smart Home System; und
- Figur 2: ein Ablaufdiagramm eines Verfahrens zum Steuern eines Haushaltsgeräts
darstellt.

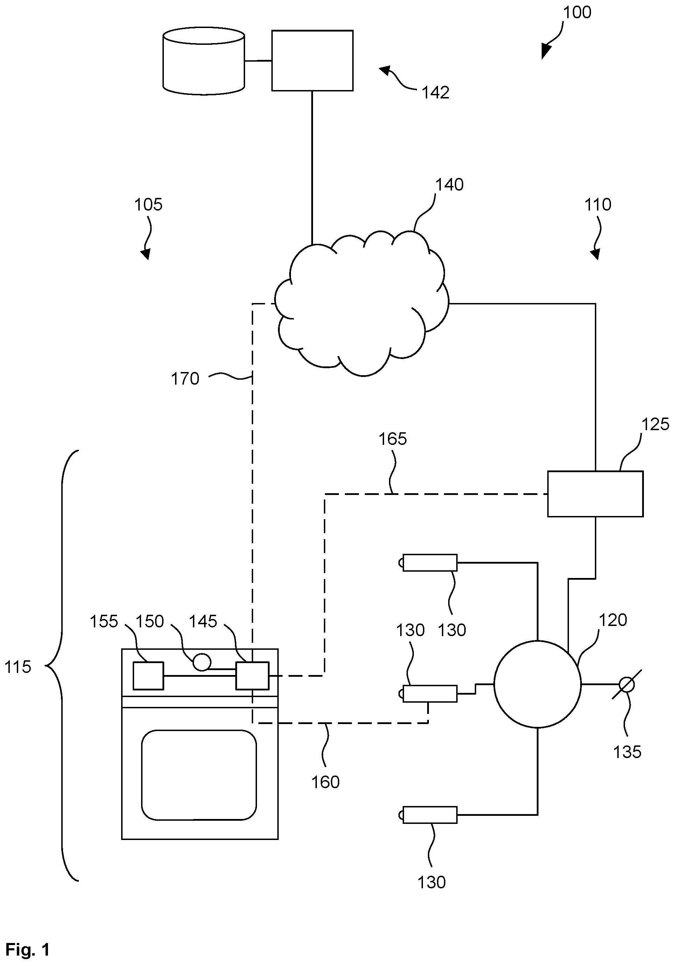

Figur 1 zeigt ein System 100, das ein Haushaltsgerät 105 und ein Smart Home System 110 umfasst, die in einem gemeinsamen Haushalt 115 angeordnet sind. Das Haushaltsgerät 105 ist beispielhaft als Herd oder Ofen dargestellt und dient üblicherweise einem vorbestimmten Zweck wie beispielsweise dem Garen oder Zubereiten einer Speise, der Wäschepflege oder einer anderen Funktion im Haushalt 115. Das Smart Home System 110 ist bevorzugt dazu eingerichtet, eine Haustechnik des Haushalts 115 zu steuern. Dazu kann insbesondere die Steuerung eines Klimas im Haushalt 115 zählen. Das Klima kann an einer oder verschiedenen Stellen des Haushalts 115 separat gesteuert werden.

Das Smart Home System 110 umfasst üblicherweise eine Steuerkomponente 120, die mit einem Gateway 125 kombiniert oder integriert sein kann, einen oder mehrere Sensoren 130 und optional einen oder mehrere Aktoren. Außerdem kann eine Schnittstelle 135 vorgesehen sein, um die Steuerkomponente 120 mit einer Einrichtung des Haushalts 115 zu verbinden, die als Sensor oder Aktor dienen kann. Beispielsweise kann über die Schnittstelle 135 ein Energiemessgerät angeschlossen werden, das eine dem Haushalt 115 zugeführte Energie bestimmt. Als Aktor des Haushalts 115 kann beispielsweise eine Heizung wirken, die über die Schnittstelle 135 angesteuert werden kann, um eine Temperatur im Haushalt 115 an einer oder mehreren verschiedenen Stellen zu beeinflussen.

Das Gateway 125 ist bevorzugt dazu eingerichtet, eine Kommunikation zu einer außerhalb des Smart Home Systems 110 liegenden Komponente zu ermöglichen. Beispielsweise kann das Gateway 125 eine drahtgebundene oder drahtlose Verbindung über ein Weitverkehrsnetz 140, beispielsweise ein Mobilfunknetz oder das Internet, ermöglichen.

Über das Internet 140 kann eine externe Stelle 142 erreicht werden, die beispielsweise als Server oder Dienst in einer Cloud realisiert sein kann. Die externe Stelle 142 kann dazu eingerichtet sein, Daten aus dem Haushalt 115 zu speichern, zu verarbeiten und/oder bereitzustellen.

Das Haushaltsgerät 105 umfasst eine Steuervorrichtung 145, die dazu eingerichtet sein kann, eine Funktion des Haushaltsgeräts 105 zu steuern. Dazu kann die Steuervorrichtung 145 mit einer Eingabevorrichtung 150 und/oder einer Ausgabevorrichtung 155 verbunden sein.

Es wird vorgeschlagen, dass die Steuervorrichtung 145 dazu eingerichtet ist, einen insbesondere vorbestimmten Steuerparameter vom Smart Home System 110 abzurufen und einen Vorschlag zum verbesserten Betrieb des Haushaltsgeräts 105 in Abhängigkeit des Steuerparameters bereitzustellen.

Die Steuervorrichtung 145 kann den Steuerparameter auf unterschiedliche Weisen vom Smart Home System 110 abrufen. Eine erste Verbindung 160 kann zwischen der Steuervorrichtung 145 und einem der Sensoren 130 des Smart Home Systems 110 hergestellt werden. Die erste Verbindung 160 ist bevorzugt drahtlos und kann beispielsweise über WiFi (IEEE 802.11), Bluetooth, Bluetooth-Low Energy, Zigbee oder LoRaWAN hergestellt werden.

Eine zweite Verbindung 165 kann zwischen der Steuervorrichtung 145 und der Steuerkomponente 120 oder dem Gateway 125 hergestellt werden. Diese Verbindung kann beispielsweise drahtlos über WiFi, Bluetooth, Bluetooth-Low Energy oder drahtgebunden über Ethernet realisiert sein. Die Steuervorrichtung 145 kann auch über eine dritte Verbindung 170 mit der externen Komponente 142 kommunizieren. Dazu kann eine Technologie wie Ethernet oder DSL verwendet werden.

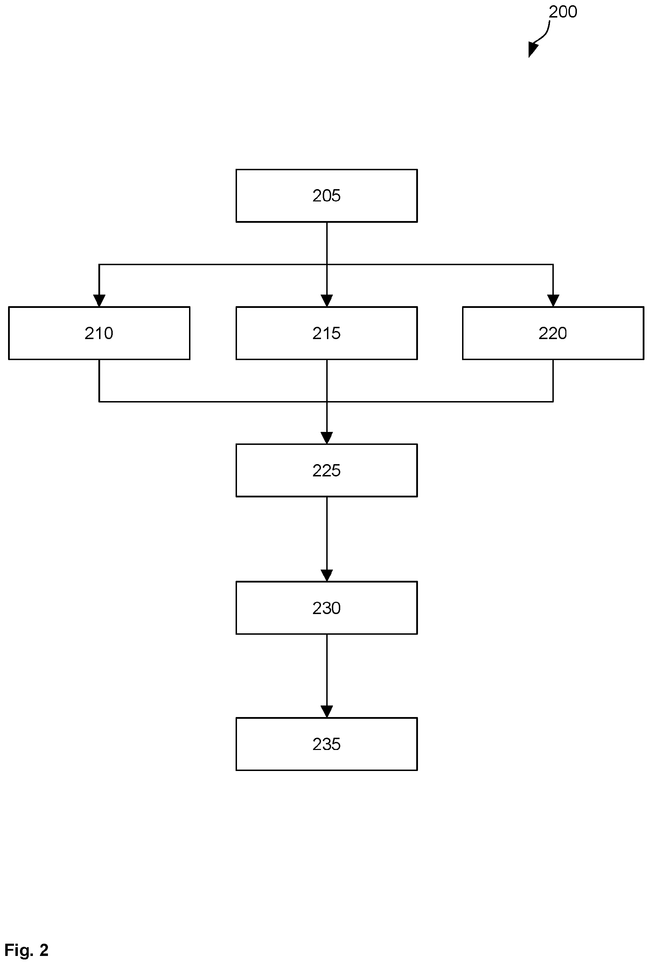

Figur 2 zeigt ein Ablaufdiagramm eines Verfahrens 200 zum Steuern eines Haushaltsgeräts 105. In einem ersten Schritt 205 kann ein Betrieb des Haushaltsgeräts 105 angefordert oder gesteuert werden. In nachfolgenden Schritten 210, 215 und 220 kann ein Steuerparameter vom Smart Home System 110 abgerufen werden. Dabei können unterschiedliche Wege beschritten werden.

In einem Schritt 210 kann eine erste Verbindung 160 zu einem Sensor 130 hergestellt werden, um den Steuerparameter in Form eines Sensorwerts abzurufen. In einem Schritt 215 kann eine zweite Verbindung 165 zur Steuerkomponente 120 hergestellt werden. Sind die Steuerkomponente 120 und das Gateway 125 miteinander integriert ausgeführt, so kann die zweite Verbindung 165 auch zum Gateway 125 führen.

In einem Schritt 220 kann eine dritte Verbindung 170 zur entfernten Stelle 142 hergestellt werden, mit der auch das Smart Home System 110 kommunizieren kann.

Es ist zu beachten, dass auch mehrere der Schritte 210, 215, 220 zueinander parallel oder ergänzend durchgeführt werden können.

In einem Schritt 225 werden ein oder mehrere Steuerparameter über wenigstens eine der Verbindungen 160 bis 170 vom Smart Home System 110 abgerufen. Auf der Basis des wenigstens einen abgerufenen Steuerparameters kann nachfolgend in einem Schritt 230 ein Vorschlag zum verbesserten Betrieb des Haushaltsgeräts 105 bereitgestellt werden, automatisch ein verbesserter Betrieb des Haushaltsgeräts veranlasst und/oder ein Befehl an das Smart Home System übermittelt werden, dessen Ausführung einen verbesserten Betrieb des Haushaltsgeräts ermöglicht. Der Vorschlag bzw. der verbesserte Betrieb kann insbesondere eine veränderte Benutzung des Haushaltsgeräts 105, einen Benutzungszeitpunkt oder die Art seiner Benutzung umfassen. Der Vorschlag kann im Schritt 230 an einen Benutzer ausgegeben werden, insbesondere mittels der Ausgabevorrichtung 155.

Der Vorschlag kann einen steuerbaren Betriebsparameter des Haushaltsgeräts 105 umfassen und in einem Schritt 235 kann der entsprechende Parameter gesteuert werden. So kann beispielsweise eine Erwärmung einer Speise durch einen Ofen oder Herd verstärkt oder verringert werden, an einer Waschmaschine können eine Laugentemperatur oder eine Schleuderdrehzahl verändert werden und an einem Wäschetrockner können eine Trockentemperatur oder ein angestrebter Feuchtigkeitsgrad angepasst werden. In Abhängigkeit des vorliegenden Haushaltsgeräts 105 sind auch andere Anpassungen möglich. Beispielsweise kann die Betriebsstufe einer Dunstabzugshaube entsprechend gesteuert werden.

In einem ersten Anwendungsbeispiel kann das Haushaltsgerät 105 durch ein Kochfeld repräsentiert sein, das in einer Küche eines Haushalts angebracht ist. Vom Smart Home System 110 bezieht das Kochfeld 105 eine Luftfeuchtigkeit, die mittels eines Sensors 130 des Smart Home Systems 110 bestimmt wurde. Das Kochfeld 105 kann aufgrund seines Betriebszustands oder anderer Informationen über seine Verwendung bestimmen, dass es aktuell oder in absehbarer Zukunft die Luftfeuchtigkeit steigern wird, beispielsweise weil es dazu verwendet wird, Wasser in einem Topf ohne Deckel sprudelnd zu kochen.

Dazu kann das Kochfeld 105 in einen Kochprozess eingebunden sein, beispielsweise indem es über einen aktuell durchgeführten oder anstehenden Verarbeitungsschritt eines Kochrezepts informiert ist. Alternativ kann das Kochfeld 105 seine Verwendung auf der Basis von Sensoren oder seiner Handhabung selbst bestimmen.

Das Kochfeld 105 kann aufgrund der Bestimmung eine Handlungsempfehlung bestimmen und bereitstellen. Beispielsweise kann die Handlungsempfehlung darin bestehen, den Topf mit einem Deckel teilweise oder vollständig zu verschließen und optional eine Wärmezufuhr zu drosseln. Alternativ kann ein Einschalten einer Abzugshaube oder ein Öffnen eines Fensters oder einer Tür empfohlen werden.

In einer weiteren Ausführungsform kann das Kochfeld 105 die Art seiner Verwendung auf der Basis des vom Smart Home System 110 bereitgestellten Parameters bestimmen. Eine Handlungsempfehlung kann in entsprechender Weise bestimmt und bereitgestellt werden. In beiden Fällen können die Bestimmungen der Verwendung des Haushaltsgeräts 105 und/oder der Handlungsempfehlung zusätzlich auf der Basis von Informationen erfolgen, die aus einer anderen Quelle bereitgestellt sind, beispielsweise aus dem Internet. Wird beispielsweise aufgrund einer externen Wetterinformation bestimmt, dass eine Außentemperatur unter einem vorbestimmten Wert liegt, so kann die Empfehlung zum Öffnen eines Fensters unterbleiben oder erst bei einer erhöhten Luftfeuchtigkeit gegeben werden.

In einem zweiten Anwendungsbeispiel umfasst das Haushaltsgerät 105 eine Dunstabzugshaube, die Luft aus dem Haushalt nach außen befördert. Eine Stellung eines Fensters (z. B. offen, gekippt oder geschlossen) kann mittels eines entsprechenden Sensors bestimmt werden. Um ein Ansaugen von Verbrennungsgasen aus einer offenen Feuerstelle des Haushalts zu verhindern, kann die Dunstabzugshaube 105 nur dann eingeschaltet werden, wenn das Fenster zumindest teilweise geöffnet ist.

Die Dunstabzugshaube 105 kann vom Smart Home System 110 in Erfahrung bringen, ob die Feuerstelle in Verwendung ist oder nicht. Ist sie nicht in Betrieb, so kann der Betrieb der Dunstabzugshaube 105 auch bei geschlossenem Fenster ermöglicht werden. In einer weiteren Ausführungsform kann der Sensor entfallen und die Dunstabzugshaube 105 kann nur dann eingeschaltet werden, wenn vom Smart Home System 110 die Information vorliegt, dass für eine ausreichende Luftzufuhr gesorgt ist. In welcher Form diese besteht, kann dann dem Smart Home System 110 überlassen werden. Beispielsweise kann das Smart Home System 110 selbst bestimmen, ob die Feuerstelle in Betrieb ist und welche Luftzufuhr als "ausreichend" für einen Betrieb der Dunstabzugshaube 105 gelten kann.

### Bezugszeichen

- 100: System
- 105: Haushaltsgerät
- 110: Smart Home System
- 115: Haushalt
- 120: Steuerkomponente
- 125: Gateway
- 130: Sensor
- 135: Schnittstelle
- 140: Weitverkehrsnetz, WAN, Internet
- 142: entfernte Komponente
- 145: Steuervorrichtung
- 150: Eingabevorrichtung
- 155: Ausgabevorrichtung
- 160: erste Verbindung (Sensor)
- 165: zweite Verbindung (Steuerkomponente oder Gateway)
- 170: dritte Verbindung (externe Komponente)

- 200: Verfahren
- 205: Betrieb
- 210: Sensor kontaktieren
- 215: Gateway oder Steuerkomponente kontaktieren
- 220: Server kontaktieren
- 225: Parameter abrufen
- 230: Vorschlag bestimmen
- 235: Vorschlag steuern

## Patentansprüche

1. System (100), umfassend:
- ein Smart Home System (110) zur Steuerung einer Haustechnik eines Haushalts (115); und
- ein Haushaltsgerät (105) in demselben Haushalt (115);
- wobei das Haushaltsgerät (105) eine Steuervorrichtung (145) umfasst, die dazu eingerichtet ist, einen Steuerparameter vom Smart Home System (110) abzurufen und in Abhängigkeit des Steuerparameters automatisch einen verbesserten Betrieb des Haushaltsgeräts (105) zu veranlassen, einen Vorschlag zum verbesserten Betrieb des Haushaltsgeräts (105) bereitzustellen und/oder einen Befehl an das Smart Home System (110) zu übermitteln, dessen Ausführung einen verbesserten Betrieb des Haushaltsgeräts (105) ermöglicht.

2. System (100) nach Anspruch 1, wobei das Haushaltsgerät (105) unmittelbar auf einen Gegenstand einwirkt und der verbesserte Betrieb eine Behandlung des Gegenstands betrifft.

3. System (100) nach Anspruch 1 oder 2, wobei der Betrieb des Haushaltsgeräts (105) unmittelbar von einem Gegenstand im Haushalt (115) abhängig ist, der mittels des Smart Home Systems (110) abgetastet oder gesteuert wird.

4. System (100) einem der vorangehenden Ansprüche, wobei das Smart Home System (110) dazu eingerichtet ist, ein Klima in dem Haushalt (115) zu steuern oder zu beeinflussen.

5. System (100) nach Anspruch 4, wobei das Klima eine Temperatur, eine Luftfeuchtigkeit, eine Luftqualität, einen Lärm, Lichtverhältnisse oder einen Luftaustausch betrifft.

6. System (100) nach einem der vorangehenden Ansprüche, wobei der Steuerparameter ein Steuerungsziel des Smart Home Systems (110) umfasst.

7. System (100) nach Anspruch 6, wobei
- der verbesserte Betrieb des Haushaltsgeräts (105) und/oder der Befehl an das Smart Home System (110) derart bestimmt wird, dass das Steuerungsziel verbessert erreicht wird, und/oder
- der Vorschlag zum Betrieb des Haushaltsgeräts (105) derart bestimmt wird, dass das Steuerungsziel durch Beachtung des Vorschlags verbessert erreicht werden kann.

8. System (100) nach einem der vorangehenden Ansprüche, wobei der verbesserte Betrieb eine Änderung eines Betriebsparameters des Haushaltsgeräts (105) umfasst und die Steuervorrichtung (145) dazu eingerichtet ist, die Änderung am Haushaltsgerät (105) zu steuern.

9. System (100) nach einem der vorangehenden Ansprüche, wobei das Smart Home System (110) einen Sensor (130) umfasst und das Haushaltsgerät (105) unmittelbar mit dem Sensor (130) kommuniziert.

10. System (100) nach einem der vorangehenden Ansprüche, wobei das Smart Home System (110) ein Gateway (125) und mehrere Sensoren und/oder Aktoren (130) umfasst, die mit dem Gateway (125) kommunizieren; wobei das Haushaltsgerät (105) mit dem Gateway (125) kommuniziert.

11. System (100) nach einem der vorangehenden Ansprüche, wobei das Smart Home System (110) dazu eingerichtet ist, mit einer entfernten Stelle (142) zu kommunizieren; und das Haushaltsgerät (105) mit derselben entfernten Stelle (142) kommuniziert.

12. System (100) nach einem der vorangehenden Ansprüche, wobei das Smart Home System (110) dafür eingerichtet ist,
- den Zustand einer Toilettenabluftvorrichtung,
- den Zustand eines Fensters,
- den Zustand einer Feuerstelle und/oder
- den Zustand einer Feuerstellenabluftvorrichtung
zu überwachen und/oder zu steuern.

13. System nach einem der vorangehenden Ansprüche, wobei es sich bei dem Haushaltsgerät um eine Dunstabzugshaube handelt und das System (100) dafür eingerichtet ist, die Haustechnik und/oder die Dunstabzugshaube derartig zu steuern, dass durch die Dunstabzugshaube kein Rauch und/oder kein Fäkalgeruch in einen Wohnraum gesogen wird.

14. Haushaltsgerät (105), umfassend eine Steuervorrichtung (145), die dazu eingerichtet ist, einen Steuerparameter von einem im selben Haushalt (115) befindlichen Smart Home System (110), das zur Steuerung einer Haustechnik des Haushalts (115) eingerichtet ist, abzurufen und in Abhängigkeit des Steuerparameters automatisch einen verbesserten Betrieb des Haushaltsgeräts (105) zu veranlassen, einen Vorschlag zum verbesserten Betrieb des Haushaltsgeräts (105) bereitzustellen und/oder einen Befehl an das Smart Home System (110) zu übermitteln, dessen Ausführung einen verbesserten Betrieb des Haushaltsgeräts (105) ermöglicht.

15. Verfahren (200) zum Steuern eines Haushaltsgeräts (105), wobei das Verfahren (200) folgende Schritte umfasst:
- Abrufen (225) eines Steuerparameters von einem Smart Home System (110), das im selben Haushalt (115) angeordnet und zum Steuern einer Haustechnik des Haushalts (115) eingerichtet ist; und in Abhängigkeit des Steuerparameters
- automatisches Veranlassen eines verbesserten Betriebs des Haushaltsgeräts (105),
- Bereitstellen (230) eines Vorschlags zum verbesserten Betrieb des Haushaltsgeräts (105) und/oder
- Übermitteln eines Befehls an das Smart Home System (110), dessen Ausführung einen verbesserten Betrieb des Haushaltsgeräts (105) ermöglicht.
